# EUROPÄISCHE PATENTSCHRIFT

(11) **EP 1 557 309 B1**
(45) Veröffentlichungstag und Bekanntmachung des Hinweises auf die Patenterteilung: **31.03.2010**
(21) Anmeldenummer: 04027885.5
(22) Anmeldetag: 24.11.2004
(51) Int. Cl.: B60J 7/14

(54) **Absenkbares Dach eines Cabriolets**
Retractable roof of a convertible
Toit escamotable d'un cabriolet

(30) Priorität: 28.11.2003 DE 10356324
(43) Veröffentlichungstag der Anmeldung: 27.07.2005
(73) Patentinhaber: Webasto AG, 82131 Stockdorf (DE)
(72) Erfinder: Reinsch, Burkhard, 87600 Kaufbeuren (DE)

(56) Entgegenhaltungen:
- EP-A1- 0 521 307
- EP-A2- 1 125 778
- DE-A1- 4 203 229
- DE-A1- 10 023 864
- DE-A1- 19 737 349
- DE-C1- 4 326 329
- DE-C1- 19 634 511
- DE-C1- 19 957 427

## Beschreibung

Die Erfindung betrifft ein absenkbares Dach eines Fahrzeugs mit einem Dachteil, das in Schließstellung des Daches mittels einer Schließeinrichtung verriegelt gehalten ist und das eine am Dachteil bewegbar gelagerte Abdeckeinrichtung für eine im Dachteil vorhandene Öffnung aufweist.

Aus der DE 42 03 229 C2 ist ein Fahrzeug mit einem Fahrzeugdach bekannt geworden, das in einen heckseitigen Dachablageraum ablegbar ist. Ein vorderer Deckel des Daches kann in der Art eines Schiebedachdeckels mittels einer Antriebseinrichtung unter einen hinteren Deckel des Daches verschoben werden. Beidseits des vorderen Deckels angeordnete seitliche Dachteile des ablegbaren Daches sind an einem Windlauf verriegelt gehalten und werden beim Ablegen das Daches vom Windlauf gelöst. Zum Bewegen des vorderen Deckels wie auch zum Ver- oder Entriegeln der seitlichen Dachteile sind eigene Antriebe vorgesehen.

Die EP 0 521 307 A1 zeigt ein Fahrzeug mit einem ablegbaren Faltverdeck, beim dem ein vorderer Verdeckbereich als formstabile Schale ausgebildet ist und eine von einem ausstellbaren Deckel verschließbare Öffnung aufweist.

Aufgabe der Erfindung ist es, ein eingangs genanntes Dach zu schaffen, beim dem das Verriegeln des geschlossenen Daches und das Bewegen des bewegbaren Dachteils mit vereinfachten Mitteln ausführbar ist.

Diese Aufgabe wird bei dem oben genannten Dach erfindungsgemäß dadurch gelöst, daß am Dachteil eine von einer Antriebseinrichtung angetriebene Betätigungseinrichtung zum Betätigen der Schließeinrichtung und der Abdeckeinrichtung angeordnet ist. Da lediglich eine Antriebseinrichtung für die gemeinsame Betätigungseinrichtung der Schließeinrichtung und der Abdeckeinrichtung vorgesehen ist, werden weniger Bauteile am Dachteil benötigt, so daß Bauraum eingespart wird und geringere Kosten anfallen.

Vorteilhafte Ausgestaltungen der Erfindung sind in den Unteransprüchen angegeben.

In einer besonders günstigen Anordnung ist die Betätigungseinrichtung zentral und insbesondere in Querausrichtung am Vorderabschnitt des Dachteils angeordnet. Durch die zentrale Anordnung wird ein symmetrischer Aufbau des Daches mit beidseitig angeordneten Wirk- und Bewegungselementen der Schließ- oder Riegeleinrichtung und der Abdeckeinrichtung ermöglicht.

Wenn zweckmäßigerweise die Antriebseinrichtung im wesentlichen in Querausrichtung neben, d. h. vor oder insbesondere hinter der Betätigungseinrichtung angeordnet ist, ergibt sich eine sehr kompakt bauende Einheit, die in Fahrzeuglängsrichtung wenig Platz benötigt und in einem sehr schmalen vorderen Dachabschnitt des bewegbaren Dachteils untergebracht werden kann. Damit bleibt ein großer Durchsichtbereich bei einem Glasdach erhalten. Die Antriebseinrichtung weist insbesondere einen Hydraulikzylinder, einen elektrohydraulischen Stellantrieb oder einen elektromechanischen Antrieb auf. Der Hydraulikzylinder ist ein an sich bekanntes System mit einer Pumpe und einem geschlossenem Fluidkreislauf zum Antreiben des ein- und ausfahrbaren Kolbens, so daß lediglich zwei elektrische Anschlußleitungen mit dem Hydraulikzylinder verbunden werden müssen, die im Dach problemlos verlegt werden können. Der Hydraulikzylinder weist eine hohe lineare Stellkraft über seinen Stellweg auf.

Bei dem erfindungsgemäßen Dach ist beidseits am Dachteil jeweils eine Schließeinrichtung und eine Bewegungseinrichtung der Abdeckeinrichtung angeordnet, die jeweils mittels eines Verbindungsmittels, insbesondere einem drucksteifen Antriebskabel, mit der Betätigungseinrichtung gekoppelt sind. Die Schließeinrichtung enthält z. B. zwei seitlich am Vorderrand des vorderen Dachteils angeordnete Verschlußhaken und kann zusätzlich auch eine zum nach hinten anschließenden nächsten Dachteil verriegelnde Verschlußeinheit aufweisen. Durch eine unmittelbare ständige Kopplung der Schließeinrichtung an die Betätigungseinrichtung wird eine sichere Funktion der Schließeinrichtung bereitgestellt.

Vorzugsweise ist die Betätigungseinrichtung verstellbar zwischen zumindest zwei Stellungen und insbesondere zwischen einer Schließstellung, in der die Schließeinrichtung verriegelt und die Abdeckeinrichtung geschlossen ist, einer Zwischenstellung, in der die Schließeinrichtung verriegelt und die Abdeckeinrichtung geöffnet ist, und einer Offenstellung, in der die Schließeinrichtung entriegelt und die Abdeckeinrichtung geschlossen ist.

Gemäß einer bevorzugten Ausgestaltung enthält die Betätigungseinrichtung einen mit der Bewegungseinrichtung der Abdeckeinrichtung verbundenen Steuergleiter, einen mit der Schließeinrichtung verbundenen Verschlußgleiter und eine Koppelungseinrichtung, die wahlweise den Steuergleiter mit dem Verschlußgleiter für eine gemeinsame Bewegung koppelt oder für eine Relativbewegung zwischen dem Steuergleiter und dem Verschlußgleiter entkoppelt.

Vorzugsweise enthält die Betätigungseinrichtung eine Führungsschiene, an der der Steuergleiter und der Verschlußgleiter verschiebbar gelagert sind. Die Führungsschiene, z. B. ein Stranggußprofil, ist an dem Dachteil befestigt. Andererseits kann die Funktion der Führungsschiene auch an einem Rahmenbauteil des Dachteils integriert sein.

Das erfindungsgemäße Dach kann grundsätzlich in unterschiedlichen Ausführungen von ablegbaren Fahrzeugdächern wie Faltdächer oder Klappverdecke bzw. Hardtops realisiert werden. Die Abdeckeinrichtung ist beispielsweise ein Hubdach mit ausstellbarem Deckel, insbesondere Glasdeckel, kann aber auch ein Lamellendach sein.

Nachfolgend wird ein Ausführungsbeispiel des erfindungsgemäßen Daches unter Bezugnahme auf die Zeichnung näher erläutert. Es zeigt:
- Fig. 1: in perspektivischer Draufsicht ein Cabriolet mit einem geschlossenen Klappdach, in dessen vorderem Dachteil ein bewegbarer Deckel eine Dachöffnung verschließt;
- Fig. 2: in perspektivischer schematischer Darstellung ein die Dachöffnung umschließendes Rahmenteil des vorderen Dachteils;
- Fig. 3: in einer Längsschnittansicht durch die Dachlängsmittelebene den Vorderabschnitt des vorderen Dachteils;
- Fig. 4: in perspektivischer Darstellung eine Längsschnittansicht durch das vordere Rahmenteil des vorderen Dachteils;
- Fig. 5: in perspektivischer Draufsicht eine seitlich angeordnete Hubmechanik für den Deckel in einer Schließstellung;
- Fig. 6: in perspektivischer Draufsicht die seitlich angeordnete Hubmechanik gemäß Fig. 5 in einer Zwischenstellung bei noch geschlossenem Deckel;
- Fig. 7: in perspektivischer Draufsicht die seitlich angeordnete Hubmechanik gemäß Fig. 5 in einer den Deckel anhebenden Hubstellung;
- Fig. 8: in perspektivischer Draufsicht eine Riegeleinheit am Vorderrand des vorderen Dachteils;
- Fig. 9: in perspektivischer Draufsicht einen zentralen Betätigungsmechanismus am Vorderabschnitt des vorderen Dachteils mit der Riegeleinheit in Schließstellung;
- Fig. 10: in perspektivischer Explosionsdarstellung den zentralen Betätigungsmechanismus;
- Fig. 11: in perspektivischer Explosionsdarstellung in einer entgegengesetzten Ansicht den zentralen Betätigungsmechanismus;
- Fig. 12: in perspektivischer Explosionsdarstellung in einer Ansicht gemäß Fig. 10 eine Steuereinrichtung des zentralen Betätigungsmechanismus;
- Fig. 13: in perspektivischer Explosionsdarstellung in einer Ansicht gemäß Fig. 11 die Steuereinrichtung des zentralen Betätigungsmechanismus;

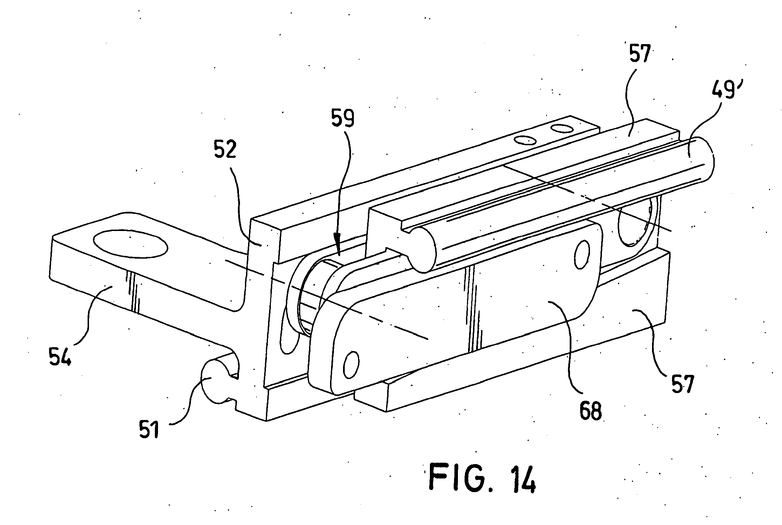

- Fig. 14: in perspektivischer Darstellung in einer Ansicht gemäß Fig. 11 die zusammengebaute Steuereinrichtung des zentralen Betätigungsmechanismus; und
- Fig. 15a bis 15c: in einer Vorderansicht den Betätigungsmechanismus in drei unterschiedlichen Stellungen.

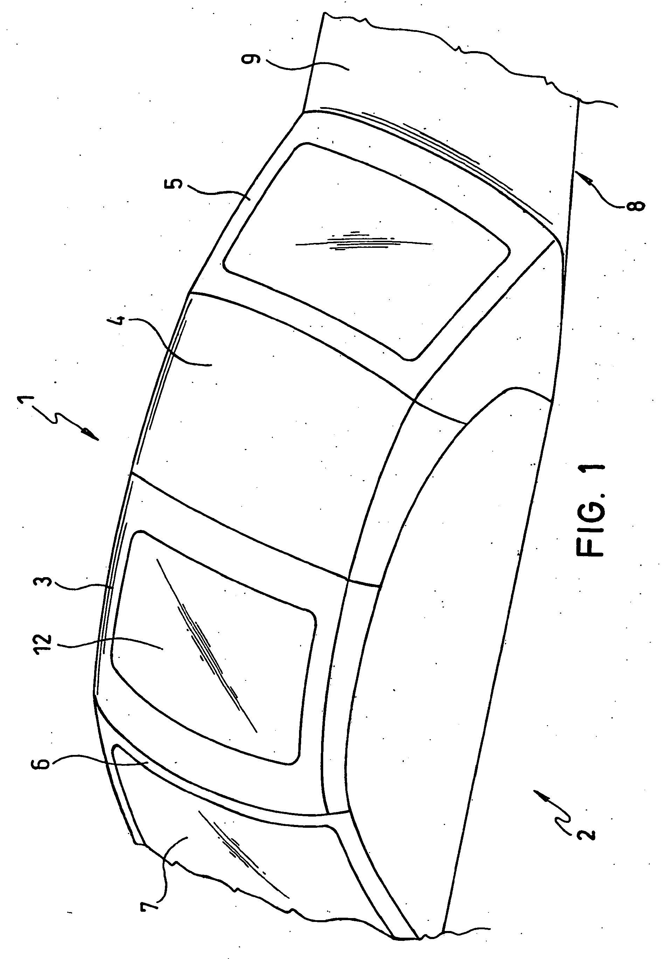

Ein Fahrzeugdach 1 eines nicht näher dargestellten Cabriolets 2 wird von einem zu öffnenden Hardtop mit einem vorderen Dachteil 3, einem mittleren Dachteil 4 und einem hinteren Dachteil 5 gebildet (siehe Fig. 1). Die drei Dachteile 3, 4, 5 sind über nicht dargestellte Lagereinrichtungen, die jeweils beidseits an den Dachteilen vorgesehen sind, derart bewegbar und insbesondere schwenkbar gelagert, daß beim Öffnen und Ablegen des Fahrzeugdachs 1, nachdem des vordere Dachteil 3 von einem Windlauf 6 oberhalb der Frontscheibe 7 abgekoppelt worden ist, das vordere Dachteil 3, das mittlere Dachteil 4 und das hintere Dachteil 5 in einen Dachablageraum oder Verdeckkasten 8 abgelegt werden, der im Heckbereich des Cabriolets 2 angeordnet und von einer Verdeck- oder Kofferraumklappe 9 abgedeckt ist.

Das vordere Dachteil 3 ist beispielsweise mittels einer Viergelenkeinrichtung am mittleren Dachteil 4 schwenkbar gelagert und schwenkt beim Ablegen gleichbombiert, d. h. ebenfalls mit nach oben weisender Oberseite, auf das mittlere Dachteil 4 und das hintere Dachteil 5 schwenkt über das vordere Dachteil 3. Das mittlere Dachteil 4 ist z. B. mittels eines Hauptviergelenks an der Karosserie schwenkbar gelagert. Diese kompakte Einheit aus den drei gleichbombiert angeordneten Dachteilen wird dann durch Verschwenken des Hauptviergelenks in den Verdeckkasten 8 abgelegt. Ein derartiges Dach ist in der DE 101 50 218 A1 beschrieben, deren Offenbarung hiermit in diese Anmeldung aufgenommen wird.

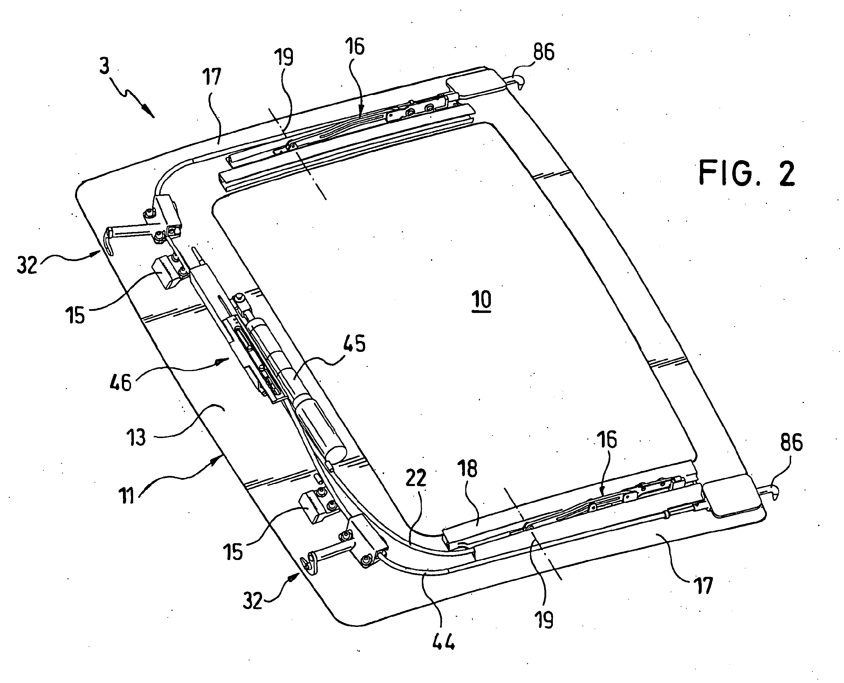

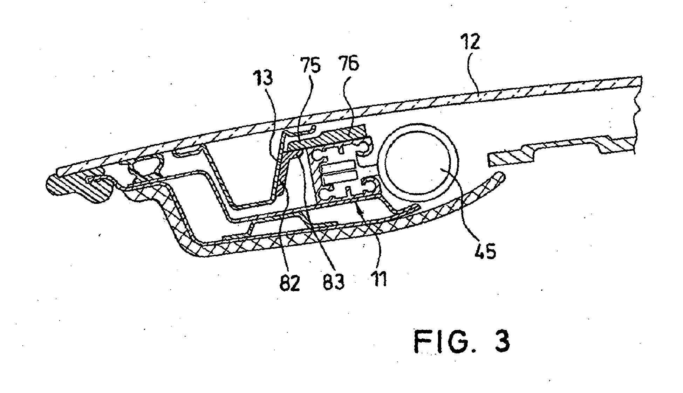

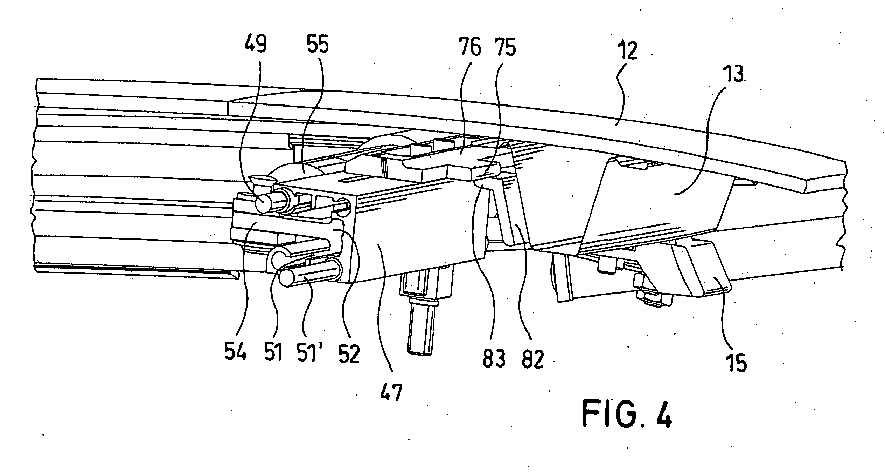

Das vordere Dachteil 3 enthält einen eine Dachöffnung 10 umgebenden Rahmen 11 (Fig. 2), eine Abdeckeinrichtung für die Dachöffnung 10, die z. B. als Hubdach mit einem an seinem Hinterrand ausstellbaren Glasdeckel 12 gebildet ist (siehe Fig. 3), und eine den Rahmen 11 oberseitig abdeckende äußere Dachhaut. Der Glasdeckel 12 enthält (siehe Fig. 3 und 4) an seiner Unterseite randseitig einen umlaufenden Verstärkungsrahmen, an dessen vorderem Rahmenquerteil 13 zwei voneinander beabstandete und nach unten abstehende Lagerteile (nicht dargestellt) angebracht sind, die sich an einem jeweiligen Basisteil 15 abstützen, das am Rahmen 11 des vorderen Dachteils 3 befestigt ist (siehe auch Fig. 2). Die beiden nach unten abstehenden Lagerteile bilden zusammen mit den beiden Basisteilen 15 eine Schwenklagerung für den Glasdeckel 12, die eine im Bereich des Vorderrandes des Glasdeckels 12 verlaufende vordere Querschwenkachse festlegt, um die der Glasdeckel 12 ausstellbar ist.

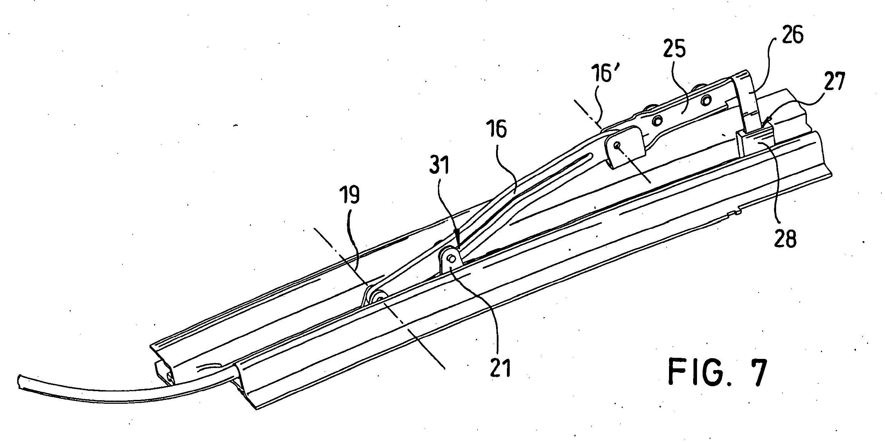

Eine Hubmechanik zum Anheben bzw. Absenken des Glasdeckels 12 an seinem Hinterrand enthält im Bereich des rechten und des linken Seitenrands des Glasdeckels 12 jeweils einen Schwenkhebel 16 (Fig. 2 und 5 bis 7), der an seinem Vorderende an einer am seitlichen Längsteil 17 des Rahmens 11 angebrachten Führungsschiene 18 um eine ortsfeste Querschwenkachse 19 schwenkbar gelagert ist und eine als längliche Ausnehmung gebildete Kulisse 20 aufweist, und einen Ausstellgleiter 21, der an der Führungsschiene 18 verschiebbar gelagert ist und mit einem drucksteifen Antriebskabel verbunden ist, das in einem Führungsrohr einer Antriebskabeleinrichtung 22 vom Vorderteil des Rahmens 11 zur Führungsschiene 18 verläuft. Der Ausstellgleiter 21 enthält zwei nach oben ragende Schenkel 23, die den Schwenkhebel 16 beidseits umgreifen, und einen die beiden Schenkel 23 verbindenden Stift 24, der sich durch die Kulisse 20 erstreckt. Das Hinterende des Schwenkhebels 16 ist in einer Schwenkachse oder Gelenkachse 16' mit einem Trägerteil 25 gelenkig verbunden, das am Verstärkungsrahmen des Glasdeckels 12 angebracht ist und eine nach unten abstehende Führungszunge 26 enthält (Fig. 7), die in einem Führungsschlitz 27 eines am Rahmen 11 bzw. an der Führungsschiene 18 angebrachten Führungsbauteils 28 geführt ist. Der Führungsschlitz 27 ist im wesentlichen vertikal bzw. als zur Schwenkachse des Glasdeckels 12 konzentrischer Kreisbogenabschnitt gebildet.

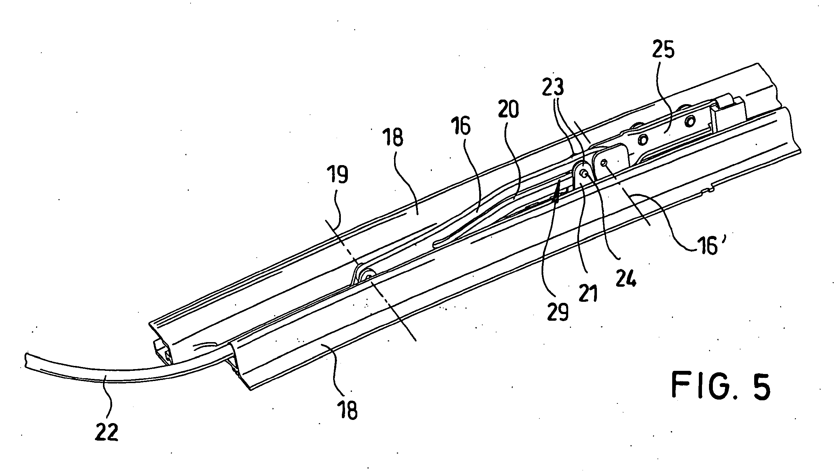

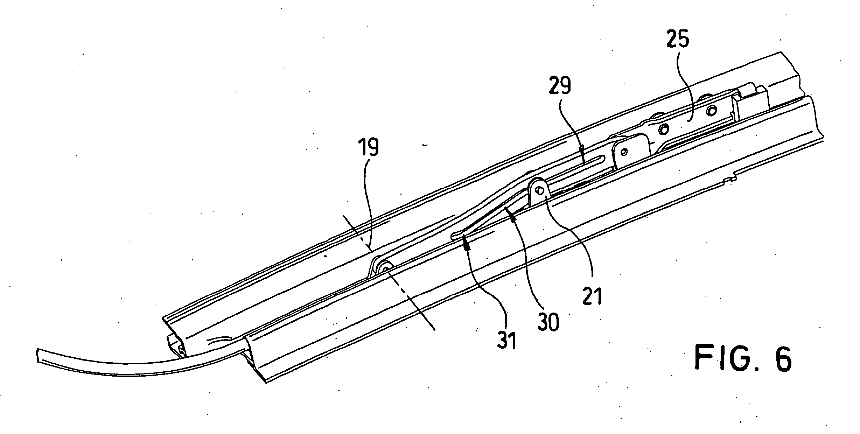

In der abgesenkten Schließstellung des Glasdeckels 12 (und somit bei abgesenktem Trägerteil 25) ist der Ausstellgleiter 21 am von der vorderen Querschwenkachse 19 entfernten Hinterende der Kulisse 20 angeordnet (siehe Fig. 5) und hält den Schwenkhebel 16 in einer unteren Stellung. Ein Hinterabschnitt 29 der Kulisse 20 verläuft in dieser Stellung des Schwenkhebels 16 parallel zur Führungsschiene 18 des Ausstellgleiters 21, so daß der Ausstellgleiter 21, wenn er nach vorne bis in eine Mittelstellung (Fig. 6) bewegt wird, den Schwenkhebel 16 nicht verschwenkt bzw. anhebt.

Ein sich an den Hinterabschnitt 29 nach vorne anschließender Mittelabschnitt 30 der Kulisse 20 verläuft gegenüber dem Hinterabschnitt 29 abwärts geneigt und geht in einen kurzen Vorderendabschnitt 31 über. Wenn der Ausstellgleiter 21 aus seiner Mittelstellung im Hinterendabschnitt nach vorne bewegt wird, schwenkt er aufgrund dieses Verlaufs der Kulisse 20 den Schwenkhebel 16 um die Querschwenkachse 19 nach oben, wodurch mittels des Trägerteils 25 der Glasdeckel 12 angehoben wird. Wenn der Ausstellgleiter 21 den Vorderendabschnitt 31 erreicht hat (Fig. 7), ist die maximale Verschwenkung bzw. Hubhöhe des Schwenkhebels 16 erreicht. Der Vorderendabschnitt 31 der Kulisse 20 verläuft bei dem maximal verschwenkten Schwenkhebel 16 parallel zur Führungsschiene 18, so daß der sich im Vorderendabschnitt 31 der Kulisse 20 bewegende Stift 24 des Ausstellgleiters 21 den Schwenkhebel 16 nicht weiter verschwenkt.

Die Senk- oder Schließbewegung des Glasdeckels 12 bzw. der Hubmechanik erfolgt in entgegengesetztem Bewegungsablauf, wobei das Antriebskabel der Antriebskabeleinrichtung 22 den Ausstellgleiter 21 nach hinten verschiebt.

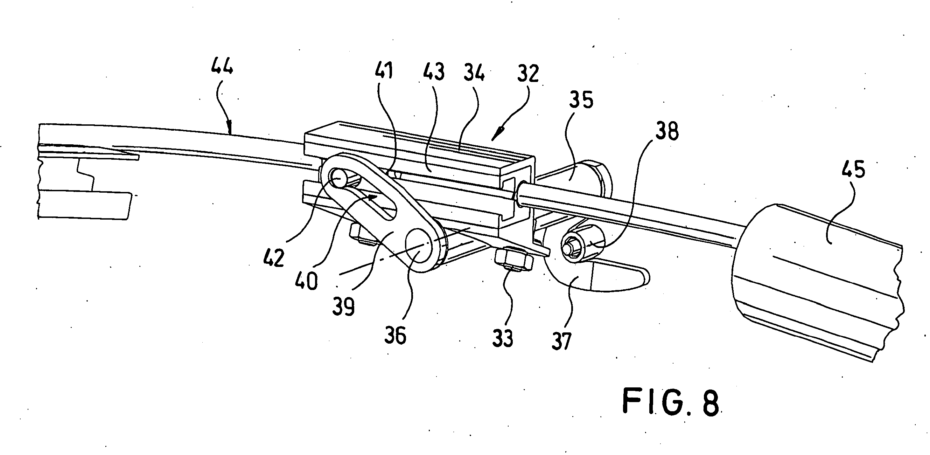

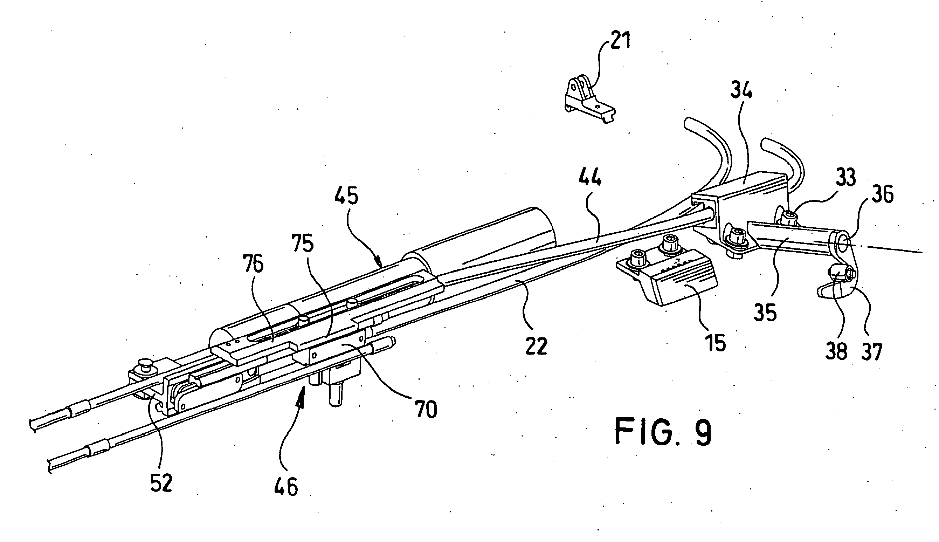

Eine Schließeinrichtung, die zum Verriegeln des vorderen Dachteils 3 vorgesehen ist, wenn sich das Dach 1 in seiner Schließstellung befindet, enthält zwei Riegeleinheiten 32 (siehe Fig. 2), die voneinander beabstandet am Vorderteil 13 des Rahmens 11 des vorderen Dachteils 3 angeordnet sind. Jede Riegeleinheit 32 weist ein am Rahmen 11 mittels zweier Schrauben 33 befestigtes Gehäuse 34 (Fig. 8 und 9) auf, das ein nach vorne ragendes Lagerrohr 35 mit einer darin drehbar gelagerten Riegelwelle 36 aufweist. Am Vorderende der Riegelwelle 36 ist ein Riegelhaken 37 angebracht, der durch Verschwenken in einer Querebene mit einem am Windlauf 6 befestigten Riegelgegenlager 38 in Eingriff gebracht werden kann. Das Riegelgegenlager 38 ist z. B. ein Bolzen oder eine auf einem Bolzen drehbar aufgenommene Hülse.

Am Hinterende der Riegelwelle 36 ist ein Betätigungshebel 39 befestigt (Fig. 8), der eine als längliche Ausnehmung gebildete Betätigungskulisse 40 enthält. In die Betätigungskulisse 40 greift ein von einem Gleiter 41 vorstehender Zapfen 42 ein. Der Gleiter 41 ist an einem Führungsteil 43 verschiebbar gelagert, das am Gehäuse 34 der Riegeleinheit 32 angebracht ist, und ist mit einem drucksteifen Antriebskabel der Antriebskabeleinrichtung 44 verbunden, das an oder in dem Führungsteil 43 geführt ist. Bei einer Verschiebung des Antriebskabels über einen Verstellweg zwischen zwei Endstellungen wird der Riegelhaken 37 zwischen seiner Offenstellung und seiner Schließstellung verschwenkt (Fig. 8 und 9 zeigen die Schließstellung).

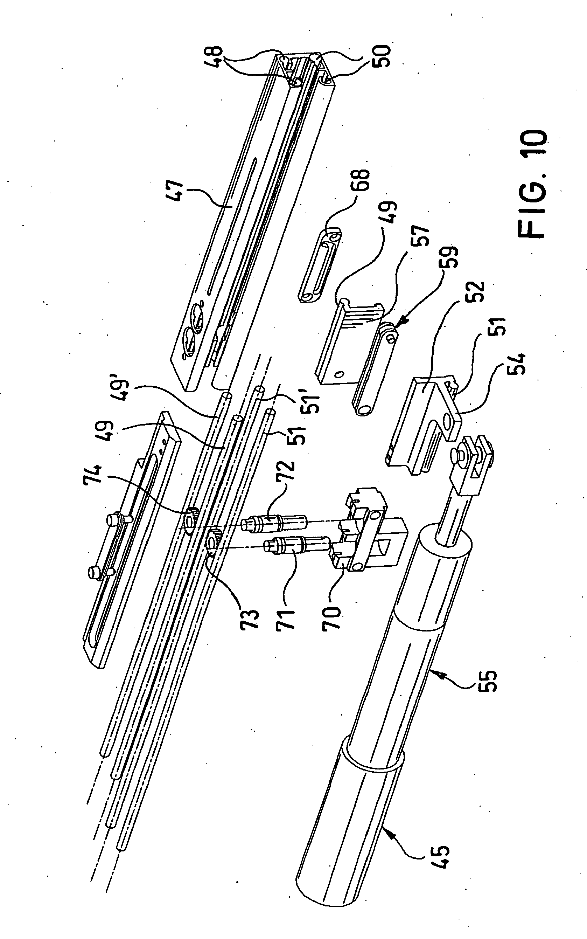

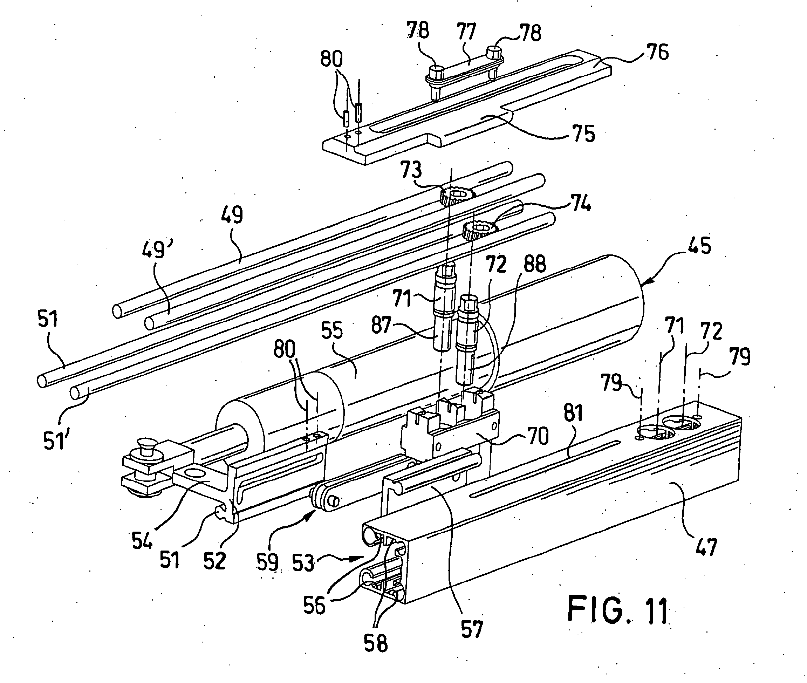

Ein von einer Antriebseinrichtung 45 angetriebener Betätigungsmechanismus 46 (siehe insbesondere Fig. 2 und 9) zum Betätigen sowohl der Schließeinrichtung wie auch der Hubmechanik der Abdeckeinrichtung bzw. des Glasdeckels 12 ist am Vorderteil 13 des Rahmens 11 des vorderen Dachteils 3 zentral in Querausrichtung angeordnet. Eine am Rahmen 11 befestigte Führungsschiene 47 des Betätigungsmechanismus 46 (Fig. 10 und 11) enthält zwei obere Führungsausnehmungen oder -bahnen 48 für die zwei Antriebskabel 49 und 49', die die rechte bzw. die linke Riegeleinheit 32 betätigen, und zwei untere Führungsausnehmungen oder -bahnen 50 für die zwei Antriebskabel 51 und 51', die die beiden seitlichen Hubeinrichtungen oder Hubmechaniken für den Glasdeckel 12 betätigen. Des weiteren ist an bzw. in der Führungsschiene 47 ein Steuergleiter 52 verschiebbar aufgenommen, der mittels eines seitlich durch einen Längsschlitz 53 der Führungsschiene 37 hervorstehenden Arm 54 mit einem Vorderende eines bewegbaren Kolbens 55 eines die Antriebseinrichtung 45 bildenden elektrohydraulischen Stellantriebs verbunden ist. Der elektrohydraulische Stellantrieb ist eine am Rahmen 11 befestigte längliche zylindrische Einheit mit einem Elektromotor und einer von diesem angetriebenen Hydraulikpumpe, die mittels eines Hydraulikfluids den Kolben 55 ein- und ausfährt. Bei unterbrochener Stromversorgung ist der Kolben 55 ohne Druckbeaufschlagung durch das Hydraulikfluid und kann durch äußere Krafteinwirkung verschoben werden.

Der Steuergleiter 52 ist in einer oberen und einer unteren Führungsbahn 56 der Führungsschiene 47 verschiebbar gelagert und mit dem Ende des zur linken Hubmechanik führenden hinteren Antriebskabels 51 fest verbunden, das in dem Führungsrohr der Antriebskabeleinrichtung 44 aufgenommen ist.

Ein Verschlußgleiter 57 des Betätigungsmechanismus 45 ist neben der der Führungsschiene 47 zugewandten Innenseite des Steuergleiters 52 angeordnet, an einer oberen und einer unteren Führungsbahn 58 in der Führungsschiene 47 verschiebbar gelagert und mit dem Ende des Antriebskabels 49' für die rechte Riegeleinheit 32 verbunden.

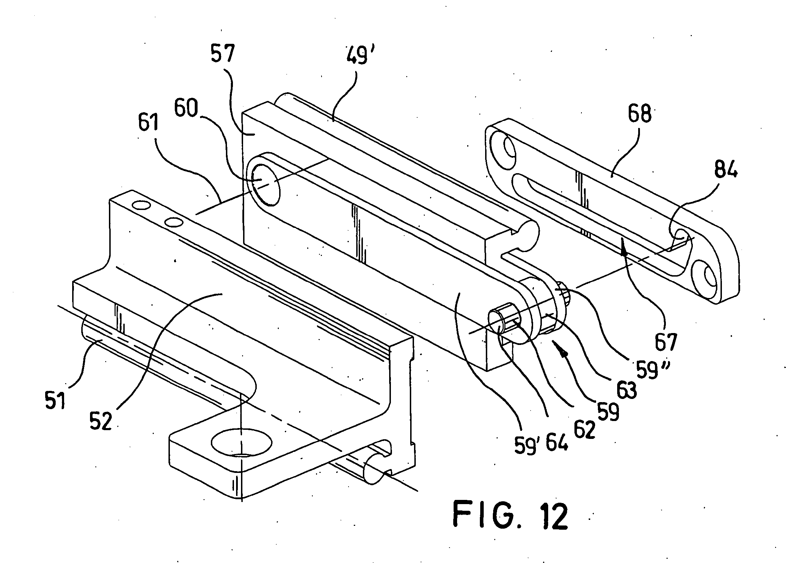

Ein Steuerhebel 59, der aus zwei zueinander parallelen und den Verschlußgleiter 57 zwischen sich aufnehmenden Schenkeln 59' und 59" besteht (Fig. 12), ist an seinem einen Ende mittels eines am Verschlußgleiter 57 befestigten Bolzens 60 um eine Schwenkachse 61 schwenkbar gelagert. Am anderen Ende des Steuerhebels 59 sind die über den Verschlußgleiter 57 hinausstehenden beiden Schenkel 59' und 59" mittels eines über die Schenkel 59' und 59" beidseits hinausstehenden Zapfens 62 und eine Distanzhülse 63 miteinander fest verbunden.

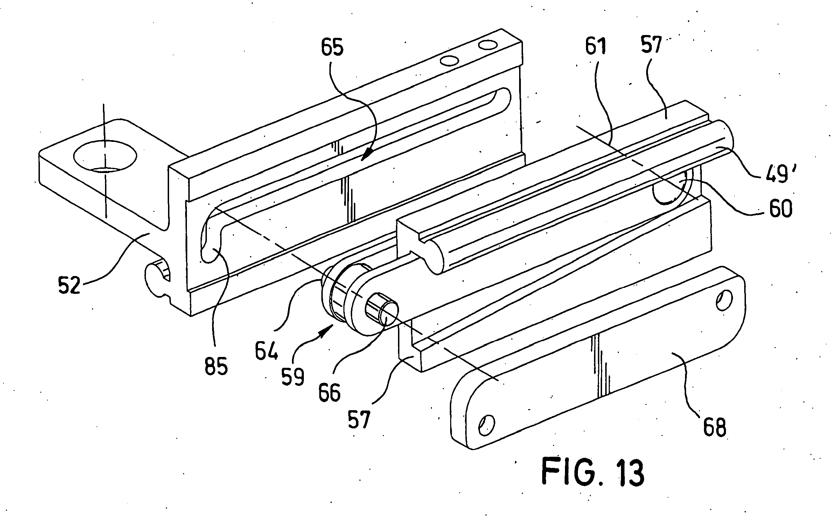

Das gegen den Steuergleiter 52 hervorstehende Zapfenende 64 ist in einer an der Innenseite des Steuergleiters 52 nutförmig gebildeten ersten Steuerkulisse 65 (Fig. 13) verschiebbar aufgenommen. Das gegenüberliegende Zapfenende 66 des Steuerhebels 59 ist in einer zweiten Steuerkulisse 67 (Fig. 12) verschiebbar aufgenommen, die an der dem Steuergleiter 52 zugewandten Seite eines Steuerkulissenträgers 68 gebildet ist, der in der Führungsschiene 47 ortsfest angebracht ist.

In der Führungsschiene 47 ist des weiteren ein Lagerbauteil 70 aufgenommen und befestigt, das zwei kurze Wellen 71 und 72 drehbar lagert, die in Längsrichtung der Führungsschiene 47 parallel nebeneinander und senkrecht zur Führungsschiene 47 angeordnet sind und auf den jeweils ein Ritzel 73 bzw. 74 fest angebracht ist. Das auf einem unteren Niveau angeordnete Ritzel 73 ist zwischen den beiden Antriebskabeln 51 und 51' für die Hubmechaniken angeordnet und mit diesen beiden Antriebskabeln 51, 51' in Eingriff, so daß über das von dem Steuergleiter 52 bewegte linksseitige Antriebskabel 51 und das untere Ritzel 73 das rechtsseitige Antriebskabel 51' in synchroner Gegenbewegung bewegt wird.

Das obere Ritzel 74 ist zwischen den beiden Antriebskabeln 49 und 49' für die Schließeinrichtung bzw. die Riegeleinheiten 32, die in der Führungsschiene 47 in den oberen Führungsbahnen 48 geführt sind, angeordnet und mit beiden Antriebskabeln 49, 49' in Eingriff, so daß über das von dem Verschlußgleiter 57 bewegte rechte Antriebskabel (das gemäß Fig. 11 am oberen Ritzel 74 vordere Antriebskabel 49') das linke hintere Antriebskabel 49 in synchroner Gegenbewegung bewegt wird.

Auf der Oberseite der Führungsschiene 47 ist eine einen Niederhalter 75 aufweisende Schiebeplatte 76 angeordnet, die mittels eines Halteteils 77 und zweier Schrauben 78, die durch einen in der Führungsschiene 47 gebildeten Längsschlitz 79 greifen und mit dem Lagerbauteil 70 verschraubt sind, in Längsrichtung der Führungsschiene 47 verschiebbar gehalten. Der Niederhalter 75 bzw. die Schiebeplatte 76 ist mittels zweier Stifte 80, die sich durch einen in der Oberseite der Führungsschiene 47 gebildete Längsschlitz 81 erstrecken, mit dem Steuergleiter 52 fest verbunden.

Der Niederhalter 75, der als eine von der Schiebeplatte 76 nach vorne vorragende Rippe gebildet ist, arbeitet mit einem Halteteil 82 zusammen (Fig. 3 und 4), das mittig am vorderen Rahmenquerteil 13 befestigt ist und einen Riegelabschnitt 83 aufweist. Bei geschlossenem Glasdeckel 12 ist der Niederhalter 75 über den Riegelabschnitt 83 verschoben und hindert diesen und damit den Glasdeckel 12 an einer Hubbewegung, z. B. aufgrund einer Hubkraft, die bei fahrendem Fahrzeug durch Unterdruck der Luftströmung auf der Dachoberseite erzeugt wird.

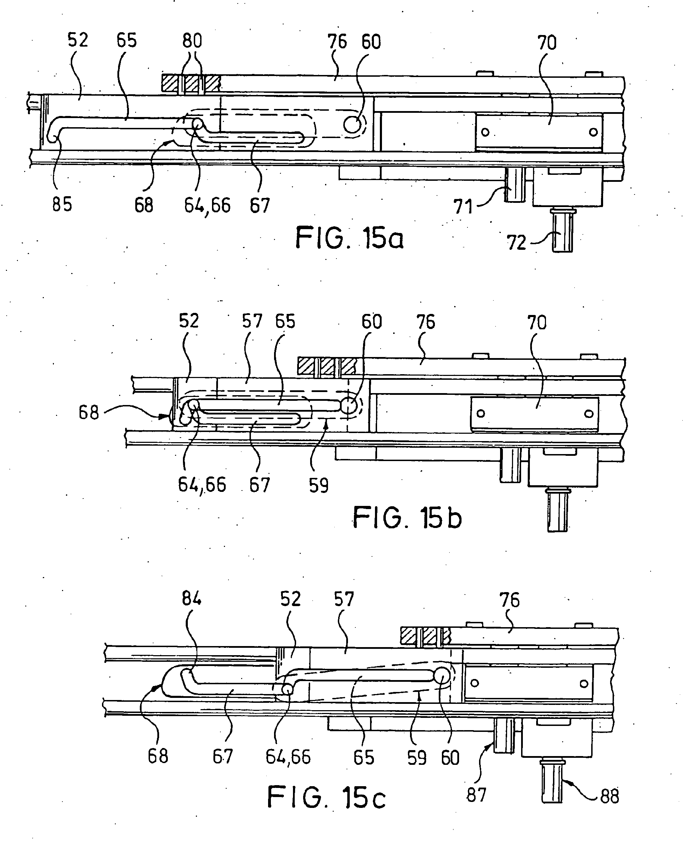

Wenn das Dach 1 geschlossen ist und dabei das vordere Dachteil 3 an dem Windlauf 6 mittels der Riegeleinrichtung 32 verriegelt gehalten ist und der Glasdeckel 12 ebenfalls geschlossen ist, sind der Kolben 55 des elektrohydraulischen Stellantriebs und der Steuergleiter 52 sowie die Schiebeplatte 76 in einer Mittelstellung angeordnet (siehe Fig. 15b). Das Zapfenende 66 des Steuerhebels 59 ist in einem nach oben gerichteten Vorderendabschnitt 84 der ortsfesten zweiten Steuerkulisse 67 angeordnet, während das gegenüberliegende Zapfenende 64 in dem linear verlaufenden Hauptabschnitt der ersten Steuerkulisse 65 unmittelbar vor dem nach unten gerichteten Vorderendabschnitt 85 angeordnet ist. In dieser Stellung sind die beiden Antriebskabel für die Hubeinrichtungen von der Führungsschiene 47 jeweils nach außen und dann nach hinten verschoben und die Ausstellgleiter 21 sind in der jeweiligen hinteren Stellung (Fig. 5), so daß jeder Schwenkhebel 16 in seiner unteren Stellung angeordnet ist, in der der Glasdeckel 12 abgesenkt und geschlossen ist. Da der Steuerhebel 59 des Betätigungsmechanismus um den Bolzen 60 bzw. die Schwenkachse 61 in seine obere Schwenkstellung verschwenkt ist, mit dem Zapfenende 66 in dem oberen Vorderendabschnitt 84 der zweiten Steuerkulisse 67 des feststehenden Steuerkulissenträgers 68 angeordnet und somit nicht verschiebbar ist, ist der Verschlußgleiter 57 festgelegt und die Riegelhaken 37 über die Antriebskabel 49, 49' somit gegen ungewolltes Öffnen gesichert. Des weiteren ist der Niederhalter 75 mit der Schiebeplatte 76 über dem Riegelabschnitt 83 angeordnet und hält damit den Glasdeckel 12 an seinem Vorderabschnitt in Schließstellung verriegelt.

Fig. 15a zeigt eine Stellung des Betätigungsmechanismus, in dem der Glasdeckel 12 ausgestellt ist, die Verriegelung bzw. Schließeinrichtung des vorderen Dachteils 3 aber geschlossen bleibt. Zum Ausstellen des Glasdeckels 12 fährt der Kolben 55 des elektrohydraulischen Stellantriebs aus (nach links in Fig. 15a) und nimmt den Steuergleiter 52 mit. Dabei gleitet das Zapfenende 64 des Steuerhebels 59 in dem linearen Abschnitt der ersten Steuerkulisse 65 des Steuergleiters 52, während das gegenüberliegende Zapfenende 66 in dem oberen Vorderendabschnitt 84 der zweiten Steuerkulisse 67 gehalten bleibt, so daß der festgehaltene Steuerhebel 59 weiterhin den Verschlußgleiter 57 ortsfest und damit über die Antriebskabel 49, 49' die Riegeleinheiten 32 verriegelt hält. Die Ausfahrbewegung des Kolbens 55 und die damit gekoppelte Bewegung des Steuergleiters 52 bewegt die Antriebskabel 51, 51' derart entgegengesetzt aneinander vorbei und an den seitlichen Längsteilen 17 des vorderen Dachteils 3 in einer Öffnungsrichtung nach vorne, daß an der Hubmechanik der Ausstellgleiter 21 aus der Mittelstellung (Fig. 6) nach vorne bewegt wird und er den Schwenkhebel 16 nach oben schwenkt (siehe Fig. 7), wodurch der Glasdeckel 12 an seinem Hinterrand angehoben wird. Selbstverständlich sind Zwischenstellungen einstellbar, wenn der Kolben 55 dementsprechend in Zwischenstellungen positioniert wird. Bei der Rückbewegung des Kolbens 55 in die Mittelstellung wird dementsprechend der Steuergleiter 52 in die mittige Ausgangsstellung bewegt.

In der linken Stellung der Betätigungseinrichtung (Fig. 15a) ist auch die mit dem Steuergleiter 52 gekoppelte Schiebeplatte 76 und damit der Niederhalter 75 in eine linke Endstellung bewegt worden. Bei dieser Bewegung ist der Niederhalter 75 aus seiner den Riegelabschnitt 83 oberseitig abdeckenden Stellung neben den Riegelabschnitt 83 verschoben worden, so daß dieser nun mit dem Aufschwenken des Glasdeckels 12 angehoben werden kann und er den Glasdeckel 12 nicht mehr geschlossen verriegelt hält.

Wenn der Kolben 55 aus der Mittelstellung (Fig. 15b) in die entgegengesetzte Richtung eingefahren wird (siehe Fig. 15c), wird der Steuergleiter 52 gegenüber dem Steuerhebel 59 soweit verschoben, bis das Zapfenende 64 des Steuerhebels 59 in den Bereich des absinkenden Vorderendabschnitts 85 der ersten Steuerkulisse 65 des Steuergleiters 52 gelangt und in diesen absinkt. Gleichzeitig kann das gegenüberliegende Zapfenende 66 aus dem Vorderendabschnitt 84 in der zweiten Steuerkulisse 67 bis auf das Niveau des linearen Hauptabschnitts der zweiten Steuerkulisse 67 absinken und sich in diesem Hauptabschnitt bewegen, so daß der über den Kolben 55 bewegte Steuergleiter 52 über den zwischengeschalteten, abwärts verschwenkten Steuerhebel 59 den Verschlußgleiter 57 verschiebt und damit die Antriebskabel 49, 49' bewegt und dementsprechend die Riegelhaken 37 öffnet. Die Antriebskabel 51, 51' der Hubmechaniken werden gleichzeitig mitbewegt, wodurch die beiden Ausstellgleiter 21 aus der Mittelstellung (Fig. 6) in die hintere Endstellung (Fig. 7) verschoben werden. Diese Verschiebung bewirkt jedoch aufgrund des Verlaufs der Kulissen 20 kein Ausschwenken der Schwenkhebel 16. Der Hinterabschnitt 29 der Kulissen 20 dient als Leerlaufabschnitt zum Toleranzausgleich der beidseitig angeordneten Ausstellgleiter 21.

Gleichzeitig mit dem Entriegeln der beiseitigen Riegeleinheiten 32 werden über die Antriebskabel 49, 49', die von den Riegeleinheiten 32 an den seitlichen Längsteilen 17 weiter nach hinten an den Hinterrand des vorderen Dachteils 3 geführt sind, hintere Riegelhaken 86 nach hinten ausgefahren, die Teil einer Verriegelungseinrichtung zum Verriegeln des vorderen Dachteils 3 mit dem mittleren Dachteil 4 sind. Das entriegelte vordere Dachteil 3 kann nun mit dem Dach 1 in den Verdeckkasten 8 abgesenkt werden. Das Glasdach 12 ist hierbei in seiner geschlossenen Schließstellung gehalten. Der verschobene Niederhalter 75 ist weiterhin auf dem Riegelabschnitt 83 angeordnet und hält diesen in seiner Schließstellung.

Beim Schließen des Daches 1 wird das an den Windlauf 6 angelegte vordere Dachteil 3 verriegelt, indem der ausfahrende Kolben 55 den Steuergleiter 52 und den mittels des Steuerhebels 59 angekoppelten Verschlußgleiter 57 in die Mittelstellung verschiebt (Fig. 15b), in der die vorderen Riegelhaken 37 wie auch die hinteren Riegelhaken 86 wieder verriegelt sind und die Hubeinrichtungen bzw. die Schwenkhebel 16 den Glasdeckel 12 noch in der unteren Schließstellung halten.

Wenn der elektrisch betätigte elektrohydraulischen Stellantrieb bei unterbrochener Stromversorgung drucklos und damit nicht in üblicher Weise funktionsfähig ist, kann eine Handkurbel von unten auf ein Vielkantprofil 87 oder 88 am vorstehenden Unterende der jeweiligen Welle 71 bzw. 72 aufgesteckt werden, so daß durch manuelles Drehen der Welle 71 oder 72 und über die zugehörigen Ritzel 73 bzw. 74 die Antriebskabel der Hubverstellung des Glasdeckels 12 oder der Riegeleinrichtung des vorderen Dachteils 3 dennoch betätigt werden können.

Statt des elektrohydraulischen Stellantriebs kann jedoch auch ein elektrischer Antrieb z. B. mit einem Spindeltrieb verwendet werden.

### Bezugszeichenliste

- 1: Fahrzeugdach
- 2: Cabriolet
- 3: vorderes Dachteil
- 4: mittleres Dachteil
- 5: hinteres Dachteil
- 6: Windlauf
- 7: Frontscheibe
- 8: Verdeckkasten
- 9: Verdreck- oder Kofferrraum-klappe
- 10: Dachöffnung
- 11: Rahmen
- 12: Glasdeckel
- 13: vorderes Rahmenquerteil

- 15: Basisteil
- 16: Schwenkhebel
- 17: Längsteil
- 18: Führungsschiene
- 19: Querschwenkachse
- 20: Kulisse
- 21: Ausstellgleiter
- 22: Antriebskabeleinrichtung
- 23: Schenkel
- 24: Stift
- 25: Trägerteil
- 26: Führungszunge
- 27: Fürungsschlitz
- 28: Führungsbauteil
- 29: Hinterabschnitt

- 30: Vorderabschnitt
- 31: Vorderendabschnitt
- 32: Riegeleinheit
- 33: Schraube
- 34: Gehäuse
- 35: Lagerrhor
- 36: Riegelwelle
- 37: Riegelhaken
- 38: Riegelgegenlager
- 39: Betätigungshebel
- 40: Betätigungskulisse
- 41: Gleiter
- 42: Zapfen
- 43: Führungsteil
- 44: Antriebskabeleinrichtung
- 45: Antriebseinrichtung
- 46: Betätigungsmechanismus
- 47: Führungsschiene
- 48: obere Führungsbahn
- 49: Antriebskabel
- 50: untere Führungsbahn
- 51: Antriebskabel
- 52: Steuergleiter
- 53: Längsschiltz
- 54: Arm
- 55: Kolben
- 56: untere Führungsbahn
- 57: Verschlußgleiter
- 58: Führungsbahn
- 59: Steuerhebel

- 59': Schenkel
- 59'': Schenkel
- 60: Bolzen
- 61: Schwenkachse
- 62: Zapfen
- 63: Distanzhülse
- 64: Zapfenende
- 65: Steuerkulisse
- 66: Zapfenende
- 67: zweite Steuerkulisse
- 68: Steuerkulissenträger

- 70: Lagerbauteil
- 71: Welle
- 72: Welle
- 73: Ritzel

- 74: Ritzel
- 75: Niederhalter
- 76: Schiebeplatte
- 77: Halteteil
- 78: Schraube
- 79: Längsschlitz
- 80: Stift
- 81: Längsschlitz
- 82: Halteteil
- 83: Riegelabschnitt
- 84: Vorderendabschnitt
- 85: Vorderendabschnitt
- 86: Riegelhaken
- 87: Vielkantprofil
- 88: Vielkantprofil

## Patentansprüche

1. Absenkbares Dach (1) eines Fahrzeugs mit einem Dachteil (3) das in Schließstellung des Daches (1) mittels einer Schließeinrichtung verriegelt gehalten ist und das eine am Dachteil (3) bewegbar gelagerte Abdeckeinrichtung (12) für eine im Dachteil vorhandene Öffnung (10) aufweist,
**dadurch gekennzeichnet,**
**daß** am Dachteil (3) eine von einer Antriebseinrichtung (45) angetriebene Betätigungseinrichtung (46) zum Betätigen der Schließeinrichtung (32) und der Abdeckeinrichtung (12) angeordnet ist.

2. Dach nach Anspruch 1,
**dadurch gekennzeichnet, daß** die Betätigungseinrichtung (46) zentral und insbesondere in Querausrichtung am Vorderabschnitt des Dachteils (3) angeordnet ist.

3. Dach nach Anspruch 1 oder 2,
**dadurch gekennzeichnet, daß** die Antriebseinrichtung (45) im wesentlichen in Querausrichtung neben der Betätigungseinrichtung (46) angeordnet ist und insbesondere einen Hydraulikzylinder, einen elektrohydraulischen Stellantrieb oder einen elektromechanischen Antrieb aufweist.

4. Dach nach einem der Ansprüche 1 bis 3,
**dadurch gekennzeichnet, daß** beidseits am Dachteil (3) jeweils eine Schließeinrichtung (32) und eine Bewegungseinrichtung der Abdeckeinrichtung (12) angeordnet ist, die jeweils mittels eines Verbindungsmittels, insbesondere einem drucksteifen Antriebskabel (22) mit der Betätigungseinrichtung (46) gekoppelt sind.

5. Dach nach einem der Ansprüche 1 bis 4,
**dadurch gekennzeichnet, daß** die Betätigungseinrichtung (46) verstellbar ist zwischen
einer Schließstellung, in der die Schließeinrichtung (32) verriegelt und die Abdeckeinrichtung (12) geschlossen ist,
einer Zwischenstellung, in der die Schließeinrichtung (32) verriegelt und die Abdeckeinrichtung (12) geöffnet ist, und
einer Offenstellung, in der die Schließeinrichtung (32) entriegelt und die Abdeckeinrichtung (12) geschlossen ist.

6. Dach nach einem der Ansprüche 1 bis 5,
**dadurch gekennzeichnet, daß** die Betätigungseinrichtung (46) einen mit der Bewegungseinrichtung (16) der Abdeckeinrichtung (12) verbundenen Steuergleiter (52), einen mit der Schließeinrichtung (32) verbundenen Verschlußgleiter (57) und eine Koppelungseinrichtung (59) aufweist, die wahlweise den Steuergleiter (52) mit dem Verschlußgleiter (57) für eine gemeinsame Bewegung koppelt oder für eine Relativbewegung zwischen dem Steuergleiter (52) und dem Verschlußgleiter (57) entkoppelt.

7. Dach nach Anspruch 6,
**dadurch gekennzeichnet, daß** die Betätigungseinrichtung (46) eine Führungsschiene (47) aufweist, an der der Steuergleiter (52) und der Verschlußgleiter (57) verschiebbar gelagert sind.

8. Dach nach Anspruch 6 oder 7,
**dadurch gekennzeichnet, daß** die Koppelungseinrichtung einen Steuerhebel (59) aufweist, der an dem Steuergleiter (52) oder dem Verschlußgleiter (57) gelagert ist und an dem jeweils anderen Teil (Verschlußgleiter (57) bzw. Steuergleiter (52)) frei verschiebbar oder gegen Verschieben festgelegt ist.

9. Dach nach einem der Ansprüche 6 bis 8,
**dadurch gekennzeichnet, daß** die Koppelungseinrichtung bzw. der Steuerhebel (59) in einer ersten Stellung am Dachteil (3) bzw. der Führungsschiene (47) fest angeordnet ist und in einer zweiten Stellung relativ zum Dachteil (3) bzw. der Führungsschiene (47) verschiebbar ist.

10. Dach nach einem der Ansprüche 6 bis 9,
**dadurch gekennzeichnet, daß** die Koppelungseinrichtung bzw. der Steuerhebel (59) mit einer am Steuergleiter (52) angeordneten ersten Steuerkulisse (65) und einer dachfesten bzw. an der Führungsschiene (47) fest angeordneten zweiten Steuerkulisse (67) zusammenwirkt.

11. Dach nach Anspruch 10,
**dadurch gekennzeichnet, daß** die erste Steuerkulisse (65) und die zweite Steuerkulisse (67) Riegelendabschnitte (84 bzw. 85) aufweisen.

12. Dach nach einem der Ansprüche 1 bis 11,
**dadurch gekennzeichnet, daß** der Steuergleiter (52) mit der Antriebseinrichtung (45) verbunden ist.

13. Dach nach einem der Ansprüche 1 bis 12,
**dadurch gekennzeichnet, daß** die Betätigungseinrichtung (46) einen Niederhalter (76) aufweist, der mit dem Steuergleiter (52) zur gemeinsamen Bewegung gekoppelt ist und die geschlossene Abdeckeinrichtung (12) an ihrem Vorderrandbereich in Schließstellung hält.

14. Dach nach einem der Ansprüche 1 bis 13,
**dadurch gekennzeichnet, daß** das Dachteil (3) eine frontseitige und eine heckseitige Riegeleinrichtung (37 bzw. 86) aufweist, die von der Betätigungseinrichtung (46) gleichzeitig betätigt werden.

15. Dach nach einem der Ansprüche 1 bis 14,
**dadurch gekennzeichnet, daß** das Dachteil ein vorderes Dachteil (3) ist, das frontseitig mittels einer Riegeleinrichtung (32, 37) an einem fahrzeugfesten Gegenlager (38) verriegelbar ist.

16. Dach nach einem der Ansprüche 7 bis 15,
**dadurch gekennzeichnet, daß** an der Führungsschiene (47) zwei Räder (73, 74) drehbar gelagert sind,
wobei das erste Rad (73) zwischen den beiden Antriebskabeln (49, 49') für die Bewegung der Schließeinrichtung (32) angeordnet ist und die Antriebsbewegung des von der Antriebseinrichtung (45) bewegten Antriebskabels auf das zugehörige andere Antriebskabel in gegenläufiger Bewegung überträgt, und
das zweite Rad (74) zwischen den beiden Antriebskabeln (51, 51') für die Bewegung der Abdeckeinrichtung (12) angeordnet ist und die von der Antriebseinrichtung (45) abgeleitete Antriebsbewegung des bewegten Antriebskabels auf das zugehörige andere Antriebskabel in gegenläufiger Bewegung überträgt.

17. Dach nach Anspruch 16,
**dadurch gekennzeichnet, daß** die zwei Räder (73, 74) an einer jeweiligen Lagerwelle (72 bzw. 72) drehfest angebracht sind.

18. Dach nach einem der Ansprüche 1 bis 17,
**dadurch gekennzeichnet, daß** die Betätigungseinrichtung (46) eine Verstelleinrichtung zur manuellen Notbetätigung der Schließeinrichtung (32) und/oder der Abdeckeinrichtung (12) aufweist.

19. Dach nach Anspruch 17 oder 18,
**dadurch gekennzeichnet, daß** die Lagerwellen (71, 72) der beiden Räder (73, 74) zur Notbetätigung manuell, insbesondere mittels einer auf die Lagerwellen (71, 72) aufsteckbaren Handkurbel, drehbar sind.

## Claims

1. Retractable roof (1) of a vehicle, with a roof part (3) which is kept locked in the closed position of the roof (1) by means of a locking device and which has a covering device (12), which is mounted movably on the roof part (3), for an opening (10) present in the roof part, **characterized in that** an actuating device (46) which is driven by a driving device (45) and is intended for actuating the locking device (32) and the covering device (12) is arranged on the roof part (3).

2. Roof according to Claim 1, **characterized in that** the actuating device (46) is arranged centrally and in particular in a transverse orientation on the front section of the roof part (3).

3. Roof according to Claim 1 or 2, **characterized in that** the driving device (45) is arranged substantially in a transverse orientation next to the actuating device (46) and in particular has a hydraulic cylinder, an electrohydraulic actuator or an electromechanical drive.

4. Roof according to one of Claims 1 to 3, **characterized in that** a respective locking device (32) and a movement device of the covering device (12) are arranged on both sides of the roof part (3), said locking device and movement device each being coupled to the actuating device (46) by means of a connecting means, in particular a compression-proof driving cable (22).

5. Roof according to one of Claims 1 to 4, **characterized in that** the actuating device (46) is adjustable between a closed position, in which the locking device (32) is locked and the covering device (12) is closed, an intermediate position, in which the locking device (32) is locked and the covering device (12) is open, and an open position, in which the locking device (32) is unlocked and the covering device (12) is closed.

6. Roof according to one of Claims 1 to 5, **characterized in that** the actuating device (46) has a control slider (52) connected to the movement device (16) of the covering device (12), a closure slider (57) connected to the locking device (32), and a coupling device (59) which either couples the control slider (52) to the closure slider (57) for a joint movement, or decouples the control slider (52) and the closure slider (57) for a relative movement therebetween.

7. Roof according to Claim 6, **characterized in that** the actuating device (46) has a guide rail (47) on which the control slider (52) and the closure slider (57) are displaceably mounted.

8. Roof according to Claim 6 or 7, **characterized in that** the coupling device has a control lever (59) which is mounted on the control slider (52) or on the closure slider (57) and is freely displaceable or fixed against displacement on the respective other part (closure slider (57) or control slider (52)).

9. Roof according to one of Claims 6 to 8, **characterized in that** the coupling device or the control lever (59) is arranged fixedly on the roof part (3) or the guide rail (47) in a first position and is displaceable relative to the roof part (3) or the guide rail (47) in a second position.

10. Roof according to one of Claims 6 to 9, **characterized in that** the coupling device or the control lever (59) interacts with a first control slot (65) arranged on the control slider (52) and with a second control slot (67) which is mounted on the roof or is arranged fixedly on the guide rail (47).

11. Roof according to Claim 10, **characterized in that** the first control slot (65) and the second control slot (67) have latching end sections (84 and 85, respectively).

12. Roof according to one of Claims 1 to 11, **characterized in that** the control slider (52) is connected to the driving device (45).

13. Roof according to one of Claims 1 to 12, **characterized in that** the actuating device (46) has a holding-down device (76) which is coupled to the control slider (52) for joint movement and keeps the front edge region of the closed covering device (12) in the closed position.

14. Roof according to one of Claims 1 to 13, **characterized in that** the roof part (3) has a latching device (37 and 86) on the front side and rear side, respectively, said latching devices being actuated simultaneously by the actuating device (46).

15. Roof according to one of Claims 1 to 14, **characterized in that** the roof part is a front roof part (3) which is lockable on the front side by means of a latching device (32, 37) to a vehicle-mounted counter bearing (38).

16. Roof according to one of Claims 7 to 15, **characterized in that** two wheels (73, 74) are mounted rotatably on the guide rail (47), the first wheel (73) being arranged between the two driving cables (49, 49') for the movement of the locking device (32) and transmitting the driving movement of the driving cable, which is moved by the driving device (45), in an opposite movement to the associated other driving cable, and the second wheel (74) being arranged between the two driving cables (51, 51') for the movement of the covering device (12) and transmitting the driving movement of the moving driving cable, which driving movement is derived from the driving device (45), in an opposite movement to the associated other driving cable.

17. Roof according to Claim 16, **characterized in that** the two wheels (73, 74) are fitted in a rotationally fixed manner on a respective bearing shaft (71 and 72).

18. Roof according to one of Claims 1 to 17, **characterized in that** the actuating device (46) has an adjusting device for the manual emergency actuation of the locking device (32) and/or of the covering device (12).

19. Roof according to Claim 17 or 18, **characterized in that** the bearing shafts (71, 72) of the two wheels (73, 74) are rotatable manually, in particular by means of a hand crank which can be plugged onto the bearing shafts (71, 72), for emergency actuation.

## Revendications

1. Toit escamotable (1) d'un véhicule à moteur avec une partie de toit (3) qui, en position de fermeture du toit (1), est maintenue verrouillée au moyen d'un dispositif de fermeture et qui présente un dispositif de couverture (12) monté de façon mobile sur la partie de toit (3) pour une ouverture (10) ménagée dans la partie de toit, **caractérisé en ce qu'**un dispositif d'actionnement (46) entraîné par un dispositif d'entraînement (45) est disposé sur la partie de toit (3) pour actionner le dispositif de fermeture (32) et le dispositif de couverture (12).

2. Toit selon la revendication 1, **caractérisé en ce que** le dispositif d'actionnement (46) est disposé en position centrale et en particulier en alignement transversal dans la portion avant de la partie de toit (3).

3. Toit selon la revendication 1 ou 2, **caractérisé en ce que** le dispositif d'entraînement (45) est disposé essentiellement à côté du dispositif d'actionnement (46) en alignement transversal et présente en particulier un cylindre hydraulique, un servomoteur électrohydraulique ou un entraînement électromécanique.

4. Toit selon l'une quelconque des revendications 1 à 3, **caractérisé en ce qu'**un dispositif de fermeture (32) et un dispositif de mise en mouvement du dispositif de couverture (12) sont respectivement disposés de part et d'autre de la partie de toit (3), lesquels sont couplés avec le dispositif d'actionnement (46) chaque fois au moyen d'un moyen de liaison, en particulier un câble d'entraînement (22) rigide à la pression.

5. Toit selon l'une quelconque des revendications 1 à 4, **caractérisé en ce que** le dispositif d'actionnement (46) est déplaçable entre une position de fermeture, dans laquelle le dispositif de fermeture (32) est verrouillé et le dispositif de couverture (12) est fermé, une position intermédiaire, dans laquelle le dispositif de fermeture (32) est verrouillé et le dispositif de couverture (12) est ouvert, et une position d'ouverture, dans laquelle le dispositif de fermeture (32) est déverrouillé et le dispositif de couverture (12) est fermé.

6. Toit selon l'une quelconque des revendications 1 à 5, **caractérisé en ce que** le dispositif d'actionnement (46) présente un curseur de commande (52) relié au dispositif (16) de mise en mouvement du dispositif de couverture (12), un curseur de fermeture (57) relié au dispositif de fermeture (32) et un dispositif de couplage (59), qui au choix attache le curseur de commande (52) au curseur de fermeture (57) pour un mouvement commun ou qui les détache pour un mouvement relatif entre le curseur de commande (52) et le curseur de fermeture (57).

7. Toit selon la revendication 6, **caractérisé en ce que** le dispositif d'actionnement (46) présente un rail de guidage (47), sur lequel le curseur de commande (52) et le curseur de fermeture (57) sont montés de façon déplaçable.

8. Toit selon la revendication 6 ou 7, **caractérisé en ce que** le dispositif de couplage présente un levier de commande (59), qui est monté sur le curseur de commande (52) ou sur le curseur de fermeture (57) et qui est librement déplaçable ou bloqué contre tout déplacement respectivement sur l'autre pièce [curseur de fermeture (57) ou curseur de commande (52)].

9. Toit selon l'une quelconque des revendications 6 à 8, **caractérisé en ce que** le dispositif de couplage ou le levier de commande (59) est immobilisé par rapport à la partie de toit (3) ou au rail de guidage (47) dans une première position et est déplaçable par rapport à la partie de toit (3) ou au rail de guidage (47) dans une deuxième position.

10. Toit selon l'une quelconque des revendications 6 à 9, **caractérisé en ce que** le dispositif de couplage ou le levier de commande (59) coopère avec une première coulisse de commande (65) disposée sur le curseur de commande (52) et une deuxième coulisse de commande (67) formée dans le toit ou solidaire du rail de guidage (47).

11. Toit selon la revendication 10, **caractérisé en ce que** la première coulisse de commande (65) et la deuxième coulisse de commande (67) présentent des parties d'extrémité de verrou (84 ou 85).

12. Toit selon l'une quelconque des revendications 1 à 11, **caractérisé en ce que** le curseur de commande (52) est relié au dispositif d'entraînement (45).

13. Toit selon l'une quelconque des revendications 1 à 12, **caractérisé en ce que** le dispositif d'actionnement (46) présente un appui (76), qui est couplé au curseur de commande (52) pour un mouvement commun, et qui maintient le dispositif de couverture (12) fermé sur sa région de bord avant en position de fermeture.

14. Toit selon l'une quelconque des revendications 1 à 13, **caractérisé en ce que** la partie de toit (3) présente un dispositif de verrouillage côté avant et côté arrière (37 ou 86), qui sont actionnés en même temps par le dispositif d'actionnement (46).

15. Toit selon l'une quelconque des revendications 1 à 14, **caractérisé en ce que** la partie de toit est une partie de toit avant (3), qui peut être verrouillée côté avant au moyen d'un dispositif de verrouillage (32, 37) sur un appui (38) solidaire du véhicule.

16. Toit selon l'une quelconque des revendications 7 à 15, **caractérisé en ce que** deux roues (73, 74) sont montées de façon rotative sur le rail de guidage (47), dans lequel la première roue (73) est disposée entre les deux câbles d'entraînement (49, 49') pour le mouvement du dispositif de fermeture (32) et transmet le mouvement d'entraînement du câble d'entraînement mû par le dispositif d'entraînement (45) à l'autre câble d'entraînement correspondant en mouvement de sens contraire, et la deuxième roue (74) est disposée entre les deux câbles d'entraînement (51, 51') pour le mouvement du dispositif de couverture (12) et transmet le mouvement d'entraînement du câble d'entraînement dérivé du dispositif d'entraînement (45) à l'autre câble d'entraînement correspondant en mouvement de sens contraire.

17. Toit selon la revendication 16, **caractérisé en ce que** les deux roues (73, 74) sont solidaires en rotation d'un arbre d'appui respectif (71 ou 72).

18. Toit selon l'une quelconque des revendications 1 à 17, **caractérisé en ce que** le dispositif d'actionnement (46) comprend un dispositif de déplacement pour l'actionnement manuel d'urgence du dispositif de fermeture (32) et/ou du dispositif de couverture (12).

19. Toit selon la revendication 17 ou 18, **caractérisé en ce que** les arbres d'appui (71, 72) des deux roues (73, 74) sont aptes à tourner manuellement pour un actionnement d'urgence, en particulier au moyen d'une manivelle applicable sur les arbres d'appui (71, 72).
